# EUROPEAN PATENT SPECIFICATION

(11) **EP 1 585 630 B1**
(45) Date of publication and mention of the grant of the patent: **11.06.2008**
(21) Application number: 03812776.7
(22) Date of filing: 27.10.2003
(51) Int. Cl.: B29D 11/00

(54) **METHODS FOR THE EXTRACTION OF CONTACT LENSES**
VERFAHREN ZUR EXTRAKTION VON KONTAKTLINSEN
PROC D S POUR L'EXTRACTION DE LENTILLES DE CONTACT

(30) Priority: 13.11.2002 US 426023 P
(43) Date of publication of application: 19.10.2005
(73) Proprietor: Johnson & Johnson Vision Care, Inc., Jacksonville, FL 32256 (US)
(72) Inventor: WOOD, Joe M.,, Jacksonville, FL 32205 (US); BERNARD, Anthony J.,, Jacksonville, FL 32256 (US); EVANS, Douglas L.,, Jacksonville, FL 32244 (US); SPAULDING, Terry L.,, Jacksonville, FL 32223 (US); VANDERLAAN, Douglas G.,, Jacksonville, FL 32206 (US)
(74) Representative: Mercer, Christopher Paul
(86) International application number: PCT/US2003/033867
(87) International publication number: WO 2004/052632

(56) References cited:
- EP-A- 0 480 049
- WO-A-01/45868
- US-A- 3 841 985

## Description

### FIELD OF THE INVENTION

The invention relates to methods useful in the production of contact lenses. In particular, the invention provides methods in which excess materials are removed from lenses.

### BACKGROUND OF THE INVENTION

The use of tinted contact lenses to alter the natural color of the iris is well known. Colorants used to produce tinted lenses generally are composed of a binding polymer and pigments. In one method of manufacturing tinted contact lenses described in United States Application Serial No. 10/027,579, filed December 20, 2001, the colorant is applied to uncured lens material by transfer of the colorant from a mold surface to the lens material and the lens material is subsequently cured. As disclosed in US Application Serial No. 10/027,579, prior to cure it is advantageous to heat the mold to cause the colorant to diffuse into the uncured lens material. The transfer of colorant in this manner, however, tends to produce debris on the lens surface. While not wishing to be bound by theory, it is believed that some fraction of the binding polymer, probably particularly low molecular weight species in the binder polymer, does not become trapped in the contact lens polymer. This fraction of the binding polymer instead attaches to the lens surface, and is difficult to remove during subsequent hydration and washing steps.

Hydration and washing steps for contact lenses have been disclosed in US Patents 6,196,683; 4,668,240; 5,824,719; 4,963,159; 4,634,449; 4,777,684; 4,733,959; 6,248,266; 5,151,106; 5,271,874; 5,271,875; 5,466,147; 6,348,507; 6,207,086; 6,071,112; 6,012,471; 5,836,323; 5,762,081; 5,706,634; 5,690,866; 5,649,410; 5,640,980; 5,561,970; and 5,080,839.

Known hydration and cleaning steps in distilled or deionized water, or saline solutions have been found to not remove the above-described debris; thus, a new method of extraction had to be devised to clean lenses. WO 01/45868 discloses extraction of ocular materials according to the preamble of claim 1.

### SUMMARY OF THE INVENTION

This invention provides methods for extracting excess materials from a contact lens, according to the method of claim 1.

The methods of this invention can be accomplished by treating said contact lens with at least two liquids that differ with regard to their respective temperature, ionic strength, composition, and/or pH such that the contact lens swells in the first liquid and then returns to its functional shape in the second liquid.

Examples of useful liquids that would cause a contact lens to swell and then return to its functional size are saline solutions having two different ionic strengths; deionized (DI) or distilled water and saline solutions or organic solvents having high and low temperatures; solutions having high and low percentages of organic solvents and solutions having high and low pH.

In one preferred embodiment, the methods of the invention include the steps of treating a contact lens with a first solution having a first ionic strength;
treating said contact lens with a second solution having a lower ionic strength than said first solution; and treating said contact lens with a third solution having a higher ionic strength than said second solution. The second solution causes the contact lens to swell. The contact lens returns to its functional size in the third solution. Such methods can further include the step of treating the contact lens with another solution having a lower ionic strength than said first solution.

### DETAILED DESCRIPTION OF ILLUSTRATIVE EMBODIMENTS

This invention provides methods that remove excess material from a contact lens. The term "excess material" is used herein to refer to any unbound monomers or polymers from the reaction mixture that react to form the contact lens, any diluents, and/or any unreacted monomers or polymers, colorant, dyes, pigments added to a contact lens, e.g. to tint the contact lens. The excess materials may be located on the lens surface or within the contact lens, and include any potential leachables or contaminants on or within the contact lens. The methods of this invention can be used to remove the excess material from a tinted contact lens. In certain methods, small pieces of the binder polymer, probably those having an average molecular weight of less than 5000 Daltons, are not entrapped in the lens composition and stick to the surface of the contact lens, particularly on the surface in areas of the contact lens where the binder polymer has been entrapped into the contact lens. If the pieces are not removed, they may interfere with visual acuity and comfort. This invention can be used to remove excess material, e.g. binder and colorants, from the surface of lenses made of different materials by different processes.

The term "swell" means an increase in the water content or an increase in the diameter of the contact lens or both. The increase in the percent water content will typically be at least 5 %, more preferably from 10 to 60 %, most preferably from 15 to 40 % above the percent water content of the lens when the lens is sold to an end-user, also referred to herein as the functional size. Alternatively, swell can be an increase in the diameter. Typically swell of the diameter will be an increase of at least 1 mm, more preferably from 2 mm to 6 mm, most preferably from 3 mm to 4.5 mm in diameter.

The methods of this invention can be used to extract excess materials from a soft contact lens comprising a hydrogel or a silicone hydrogel material. A hydrogel is a crosslinked polymeric system that can absorb and retain water in an equilibrium state. Preferably, the lenses of the invention are soft contact lenses having water contents of about 0 to about 90 percent, more preferably between 35 and 70 percent. For hydrogels, the lens-forming monomer mixture will typically include at least one hydrophilic monomer and a crosslinking agent (a crosslinker being defined as a monomer having multiple polymerizable functionalities).

Suitable hydrophilic monomers include those with hydroxy groups and carboxyl groups such as, unsaturated carboxylic acids, such as methacrylic acid and acrylic acid; (meth)acrylic substituted alcohols, such as 2-hydroxyethylmethacrylate and 2-hydroxyethylacrylate; vinyl lactams, such as N-vinyl pyrrolidone; and (meth)acrylamides, such as methacrylamide and N,N-dimethylacrylamide. Typical crosslinking agents include polyvinyl, typically di- or tri-vinyl monomers, such as di- or tri(meth)acrylates of diethyleneglycol, triethyleneglycol, butyleneglycol and hexane-1 ,6-diol; and divinylbenzene. A specific example of a hydrogel-forming monomer mixture is polymacon, composed primarily of 2-hydroxyethylmethacrylate with a small amount of ethyleneglycol dimethacrylate as a crosslinking monomer. Optionally, the monomer mixture may include a silicone containing monomer in order to form a silicone hydrogel copolymer. Examples of silicone-containing monomers include: monomers including a single polymerizable unsaturated radical, such as methacryloxypropyl tris(trimethylsiloxy)silane, pentamethyldisiloxanyl methylmethacrylate, tiis(triinethylsiloxy) methacryloxy propylsilane, methyldi(trimethylsiloxy) methacryloxymethyl silane, 3-[tris(trimethylsiloxy)silyl] propyl vinyl carbamate, and 3-[tris(trimethylsiloxy)silyl] propyl vinyl carbonate; and multifunctional ethylenically "end-capped" siloxane-contaiung monomers, especially difunctional monomers having two activated unsaturated radicals. A specific example of a silicone hydrogel-forming monomer mixture is balafilcon, based on N-vinyl pyrrolidone and the aforementioned vinyl carbonate and carbamate monomers, disclosed in U.S. Pat. No. 5,260,00.

Other silicone hydrogels may be made by reacting blends of macromers, monomers, and combinations thereof along with additives such as polymerization initiators. Suitable materials include, without limitation, silicone hydrogels made from silicone macromers and hydrophilic monomers. Examples of such silicone macromers include, without limitation, polydimethylsiloxane with pendant hydrophilic groups as described in United States Patents Nos. 4,259,467; 4,260,725 and 4,261,575; polydimethylsiloxane macromers with polymerizable function described in U.S. Patents Nos. 4,136,250; 4,153,641; 4,189,546; 4,182,822; 4,343,927; 4,254,248; 4,355,147; 4,276,402; 4,327,203; 4,341,859; 4,486,577; 4,605,712; 4,543,398; 4,661,575; 4,703,097; 4,837,289; 4,954,586; 4,954,587; 5,346,946; 5,358,995; 5,387,632 ; 5,451,617; 5,486,579; 5,962,548; 5,981,615; 5,981,675; and 6,039,913; and combinations thereof. They may also be made using polysiloxane macromers incorporating hydrophilic monomers such as those described in U.S. Patents Nos. 5,010,141; 5,057,578; 5,314,960; 5,371,147 and 5,336,797; or macromers comprising polydimethylsiloxane blocks and polyether blocks such as those described in U.S. Patents Nos. 4,871,785 and 5,034,461.

Suitable materials also may be made from combinations of oxyperm and ionoperm components such as described in U.S. Patents Nos. 5,760,100;5,776,999; 5,789,461; 5,807,944; 5,965,631 and 5,958,440. Hydrophilic monomers may be incorporated into such copolymers, including 2-hydroxyethyl methacrylate ("HEMA"), 2-hydroxyethyl acrylate, N,N-dimethylacrylamide ("DMA"), N-vinylpyrrolidone, 2-vinyl-4,4'-dimethyl-2-oxazolin-5-one, methacrylic acid, and 2-hydroxyethyl methacrylamide. Additional siloxane monomers may be incorporated such as tris(trimethylsiloxy)silylpropyl methacrylate, or the siloxane monomers described in U.S. Patents Nos. 5,998,498; 3,808,178; 4,139,513; 5,070,215; 5,710,302; 5,714,557 and 5,908,906. They may also include various toughening agents, UV blockers, and wetting agents. They can be made using diluents such as primary alcohols, or the secondary or tertiary alcohols described in U.S. Patent No. 6,020,445.

The preferred contact lenses include ionic hydrogels having the USAN names: etafilcon A, bufilcon A, deltafilcon A, droxifilcon A, pheinfilcon A, ocufilcon A, balafilcon A, perfilcon A, ocufilcon B, ocufilcon C, ocufilcon D, ocufilcon E, methafilcon A, vifilcon A, focofilcon A, tetrafilcon B, ocufilcon F, epsifilcon A.

The invention using buffered aqueous solutions is most effective to remove excess material from ionic contact lenses or contact lenses comprising materials having ionic groups. Examples of the ionic groups within the contact lens materials, or colorant or binder polymers, if present, include the anionic carboxylate groups derived from carboxylic acids, such as methacrylic acid, acrylic acid, itaconic acid, fumaric acid, or those derived from other monomers which form ionic groups such as N-carboxy-beta-alanine-N-vinyl ester, arid vinyl phenol, and other monomers with amino groups or phenolic groups. Amino groups and phenolic groups form ionic groups when placed in water at the appropriate pH.

In addition, ionic dyes or pigments may be used to provide additional ionic nature to the contact lens. Specific examples of positively charged pigments include: ultramarine blue, FD&C blue no. 1, and chromium hydroxide green (available from BF Goodrich, Cleveland, Ohio, USA). Specific examples of positively charged dyes (including CI designations) include: ingrain blue 1 (CI 72420), basic green 1 (Cl 42040), basic red 9 (CI 42500) and basic blue 9 (CI 52015) (available from Aldrich, Milwaukee, Wis., USA). Specific examples of negatively charged dyes (including CI designations) include: acid red 151 (CI 26900), acid blue 120 (CI 26400), acid orange 8 (CI 15575) and acid green 27 (CI 61580) (available from Aldrich).

Preferably the methods for extracting swell the lens from 5-60% above its functional size, more preferably 10-50%, most preferably 20-35 % above its functional size and then returning to its functional size. The lens may not be at its functional size prior to the first step in the method of this invention. Additionally, the swelling preferably is greater than the increase in size that results from the lens release and hydration steps that have been used in the prior art. This swelling may occur prior to or during the first step in the methods of this invention, during which the lens typically swells to its functional size or up to 5 percent above its functional size.

For methods of this invention using more than three treating steps, a different solution may be used in each of the treating steps; however, it is preferred that the same solutions are used in more than one treating step. For example, the first and third solutions and/or the second and fourth solutions and/or the first and fourth solutions may be the same in certain embodiments of the invention to simplify the process.

Various solutions can be used as long as the solutions cause the lens to swell above its functional size and then to return to its functional size. Examples of such solutions include, solutions having high and low ionic strengths. The solutions having high ionic strength can be buffered solutions, or salt solutions. The solutions having relatively lower ionic strength can be buffered solutions, salt solutions, distilled or deionized water, organic solvents, or solutions including organic solvents. The preferred lower ionic strength solution is preferably distilled water or deionized water with or without additives. Other solutions useful in one or more treating steps of this invention include solutions having high and low pH. For example contact lenses comprising phenol groups can be treated with a solution having a pH greater than 7 and then treated using solutions of high and low ionic strength to make the contact lenses swell and then shrink. For example contact lenses having amino groups can be treated with a solution having a pH less than 7 and then treated using solutions of high and low ionic strength to make the contact lenses swell and then shrink.

Preferred methods include treating the contact lens with solutions having relatively higher and then relatively lower ionic strengths. The difference in ionic strengths, measured by a conductivity meter, between the solutions having higher and lower ionic strengths is preferably between from 3 and 30, more preferably 8 and 20 milli-Siemens/cm, and most preferably between from 13 to 17 milli-Siemens/cm. Contact lens materials with relatively higher concentrations of ionic groups are generally more sensitive toward changing dimensions as the ionic strengths of these solutions is varied.

The term treating is used to mean washing, spraying, soaking, submerging, or any combination of those options. In preferred embodiments, the contact lens is soaked or submerged during the treating steps. The treating step typically lasts from between 2 minutes and 400 minutes, more preferably between from 10 minutes and 180 minutes, most preferably from 20 to 60 minutes; however, the length of the treating steps depends upon the lens materials, including the colorants materials if any, the materials that are used for the solutions or solvents, and the temperatures of the solutions. The treating time can be different than the time required for the lens and the solution to reach equilibrium. Sufficient treating times typically swell the contact lens, release the excess material from the lens, and return the lens to its functional size.

The buffered solutions used in this invention can be the same or different and include buffered salt solutions, such as a salt solution comprising one or more of the following: sodium borate, dihydrogen sodium phosphate, sodium citrate, sodium acetate, and the like. Typically, the solutions include 0.01 to 10, more preferably 0.1 to 5% by weight salt.

In a preferred embodiment, the buffered solution in the last step of this removal process is typically the same solution in which the contact lens is stored in the package. In a preferred embodiment, the buffered solution includes 0.84% sodium chloride aqueous solution having 800 ppm Tween 80, 0.93% boric acid, and 0.18% sodium borate (by weight). A final treating step with saline solution can occur when the contact lens is packaged; however, in a preferred extraction method the above described treating steps are in addition to a separate step of placing the lens in the saline solution in the package.

The solutions may include any number of additives including surfactants, e.g., Tween 80, which is polyoxyethylene sorbitan monooleate), Tyloxapol, octylphenoxy (oxyethylene) ethanol, amphoteric 10, preservatives, e.g. EDTA, sorbic acid, DYMED, isopropanol, chlorhexadine gluconate, hydrogen peroxide, thimerosal, polyquad, polyhexamethylene biguanide, antibacterial agents, lubricants, salts and buffers. Usually these additives are added to the solution in amounts varying between 0.01 and 10% by weight, but cumulatively less than 10% by weight.

The temperatures of the solutions can be anywhere from near freezing to near boiling; however, it is preferred that the temperatures are between 5 and 95°C, more preferably between 45 and 80°C. If the solutions are cooler or hotter, then the time that the contact lenes are treated with the solutions can be adjusted to achieve the desired swelling and subsequent shrinking.

In alternative embodiments of the invention additional treating steps can be included in the methods of the invention, including an initial treatment with DI or distilled water, which is particularly preferred to remove the diluent within the contact lens material, and to remove the contact lens from the lens mold. This initial treatment may also swell the contact lens.

The methods of extraction typically follows the process step of demolding, *i.e.* removing one half of the molding assembly which typically includes a front curve mold and a back curve mold. In the present method of the invention the lenses are demolded by any of the methods described in US Patents 5,935,492; 5,815,238; 5,744,357; 5,693,268; 5,690,973; 5,294,379 and US Patent Application 10/117545, filed April 5, 2002. In a preferred method, after demolding, the lenses on the front curves which may be part of a frame as shown in US Patent 5,080,839 are mated with individual concave slotted cups to receive the contact lenses when they release from the front curves. The cups are part of a tray. There are 32 lenses per tray and 20 trays are accumulated into a magazine. Up to 56 magazines are accumulated and then lowered into tanks between 500 and 1000 gallons by a large robot. The number of lenses in the tank provide at least 1 ml/lens solution in the tank. 100 to 150 gallons/minute of the solution in the tank are removed from the bottom of the tank, filtered and returned to the top of the tank. 1 to 3 gallons/min. of new solution are introduced and an equivalent solution is removed from the tank. The solution in the tank is preferably maintained at 70-80°C. The solution includes deionized water, or distilled water, preferably deionized water. The solution also preferably includes 800 ppm Tween 80. The lenses are submerged in the tank for approximately 88-232 minutes depending on the lens compositions. This leaching step releases the lens from the lens curve mold and starts hydrating the lens. The diluent e.g. the glycerol comes out of the lens, and water goes into the lens. When the lens is treated in this manner, it may expand less than 5% in diameter, approximately to its functional size.

The magazines housing the contact lenses are placed in a second tank having the buffered solution comprising 0.84% sodium chloride, 800 ppm Tween 80, 0.93% boric acid, and 0.18% sodium borate (by weight) in DI water. The preferred temperature is 45°C. The treatment time is preferably greater than 156 minutes. The volume of solution, the circulation and filtering are the same as for the prior tank. For the preferred embodiment, sodium borate is the salt that causes the methacrylate groups to deprotonate in this second step. The contact lens remains approximately the same size and shape.

After submerging the lenses in the buffered solution above, the magazines holding the lenses are removed from the tank having the saline solution and placed in a third tank comprising the same DI water solution described above. The contact lenses are kept in the tank for 45-70 minutes, at 70-80 C. In this DI water the lenses swell allowing any adsorbed debris or contaminant to be expelled from the surface and from inside the lens polymer. The lens swells to 5 to 50% larger than its functional size.

The last step returns the lens to its functional size shape and orientation. In the preferred embodiment, in the last step the lenses are removed from the DI water solution in the third tank and submerged in a fourth tank containing the same saline solution described above for the same times and temperatures.

The contact lens treated in this process is preferably a tinted contact lens. The tinting process can be by any method described in the prior art; such as by soaking a contact lens in colorant with or without the use of swelling agents, pad printing directly on the contact lens, pad printing a lens mold or any other method known to a person of ordinary skill in the art. Some tinting methods are described in US Patents 4,981,457; 5,244,470; 6,196,653; 4,668,240; 5,824,719; 4,963,159; 4,946,269; 4,872,404; 4,S98,695;5,255,077; 4,634,449; 4,705,370; 4,777,684; 4,733,959; 5,271,874; 4,859,421; 5,055,602; 5,034,166; 4,997,897;5,116,112; 5,120,121; 5,871,675; 5,938,795; 6,048,371; 6,132,043; 6,322,214; 6,364,934; 6,149,842; 6,096,799; 5,846,457; 5,S24,276; 5,792,822; 5,534,038; 5,452,655; 5,292,350; 5,160,463; 6,24S,266; 5,151,106; 5,271,574; 5,271,875; 5,466,147; and 6,348,507, U.S. Patent Application Serial No. 09/745,511 filed December 22, 2000; U.S. Patent Application Serial No. 09/792,671 1 filed February 23, 2001; U.S. Patent Application Serial No. 10/027,579 filed December 20, 2001; and U.S. Patent Application Serial No. 10/165,058 filed June 7, 2002.

In the preferred method the contact lens is made by pad printing on the mold used to mold the contact lens. The mold can be a reusable or disposable mold as disclosed in the prior art, preferably a disposable mold. In the preferred method the steps are as follows: a.) pad printing to at least a portion of a molding surface of a mold a tinting-effective amount of a colorant; b.) dispensing a lens-forming amount of a lens material monomer mix into the mold; c.) heating rapidly the mold to at or above a glass transition temperature of the colorant; d.) diffusing the lens material into the colorant while maintaining the mold temperature at or above a glass transition temperature of the colorant; and e.) curing subsequently the lens material in the mold under conditions suitable to form the tinted contact lens. The mold is preferably formed by injection molding, and the "molding surface" is preferably the mold surface used to form a surface of a lens. If the colorant is opaque, it may cover portions or the entire surface area of the contact lens that will cover the iris of the end user. If the colorant is transparent it may cover the portions or the entire surface of the contact lens that will cover the iris and pupil of the end user. Patterns for the application of colorant have been disclosed in the prior art.

The amount of colorant applied to the mold is generally about 0.5 mg to about 4.0 mg per lens.

A lens-forming amount of a lens material monomer mix then is dispensed into the mold. By "lens-forming amount" is meant an amount sufficient to produce a lens of the size and thickness desired. Typically, about 10 to about 75, preferably about 50 to about 75 mg of lens material is used. The "lens material monomer mix", is the mix of monomers, and optionally prepolymers, diluents, photoinitiators, tints, UV absorbers, processing aids, that is used to form the contact lens via curing, or cross-linking.

"Typically the lens mold or lens mold assembly is assembled by the placement of the back curve onto the front curve under pressure. Preferably, the mold is then heated rapidly to facilitate the diffusion of the lens material into the colorant, preferably to a temperature at or above the glass transition temperature ("Tg") of the colorant. Preferably, the mold is heated from about room temperature to the Tg in less than 28 seconds, more preferably from between 3-10 seconds. The molds may be heated by IR lamps preferably located in a tunnel. The period of time during which the temperature of the mold is heated depends on the time needed for diffusion which will depend upon the composition of the colorant and the lens material selected, but preferably is between from about 45 to about 75 seconds, more preferably about 65 to about 71 seconds.

Subsequent to the diffusion of the lens material into the colorant, the lens material and colorant are cured under conditions suitable to form the tinted lens. The precise conditions for curing will depend upon the components of the colorant and lens material selected. In a preferred embodiment, a visible light cure is used at room air and at a temperature of about 55 to about 70 ° C. In this embodiment, curing takes from about 75 to about 150 seconds. Once curing is completed, one mold half is removed from the other mold half by a demold apparatus. In the preferred embodiment the contact lens remains on the front curve mold for the first treatment step which hydrates the lens and releases the lens from the front mold half.

In the preferred contact lens to be treated by the method of this invention, the colorant includes one or more pigments, one or more solvents, and a binding polymer, and the lens material and the binding polymer of the colorant may form an interpenetrating polymer network or semi-IPN with the lens material.

The preferred binding polymers useful in the colorant are made from a homopolymer or copolymer, or combinations thereof, having similar solubility parameters to each other and the binding polymer has similar solubility parameters to the lens material. These binding polymers may contain functional groups that render the polymers and copolymers of the binding polymer capable of interactions with each other. The functional groups of one polymer or copolymer typically interact with that of another in a manner that increases the density of the interactions helping to inhibit the mobility of and/or entrap the pigment particles. The interactions between the functional groups may be polar, dispersive, or of a charge transfer complex nature. The functional groups may be located on the polymer or copolymer backbones or be pendant from the backbones.

For example, a monomer, or mixture of monomers, that form a polymer with a positive charge may be used in conjunction with a monomer or monomers that form a polymer with a negative charge to form the binding polymer. As a more specific example, methacrylic acid ("MAA") and 2-hydroxyethylmethacrylate ("HEMA") may be used to provide a MAA/HEMA copolymer that is then mixed with a HEMA/3-(N, N-dimethyl) propyl acrylamide copolymer to form the binding polymer. As another example, the binding polymer may be composed of hydrophobically-modified monomers including, without limitation, amides and esters of the formula:

CH₃(CH₂)ₓ-L-COCR=CH₂

wherein L may be -NH or oxygen, x may be a whole number from 2 to 24, R may be a C₁ to C₆ alkyl or hydrogen and preferably is methyl or hydrogen. Examples of such amides and esters include, without limitation, lauryl methacrylamide, and hexyl methacrylate. As yet another example, polymers of aliphatic chain extended carbamates and ureas may be used to form the binding polymer.

Preferred binding polymers are a random block copolymer of HEMA, MAA and lauryl methacrylate ("LMA"), a random block copolymer of HEMA and MAA or HEMA and LMA, or a homopolymer of HEMA. The weight percentages, based on the total weight of the binding polymer, of each component in these embodiments is about 93 to about 100 weight percent HEMA, about 0 to about 2 weight percent MAA, and about 0 to about 5 weight percent LMA.

The binding polymer is somewhat soluble in the lens material and the lens material can diffuse into the binding polymer. Typically, the molecular weight of the binding polymer is within a range that maintains a printed image of suitable quality. Preferably, the molecular weight of the binding polymer is about 7,000 to about 100,000, more preferably about 7,000 to about 40,000, most preferably about 17,000 to about 35,000 Mₚₑₐₖ which corresponds to the molecular weight of the highest peak in the SEC analyses (= (Mₙ x M_{w})^{½})

For purposes of the invention, the molecular weight is determined using a gel permeation chromatograph with a 90° light scattering and refractive index detectors. Two columns of PW4000 and PW2500, a methanol-water eluent of 75/25 wt/wt adjusted to 50mM sodium chloride and a mixture of polyethylene glycol and polyethylene oxide molecules with well defined molecular weights ranging from 325,000 to 194 are used.

One ordinarily skilled in the art will recognize that, by using chain transfer agents in the production of the binding polymer, by using large amounts of initiator, by using living polymerization, by selection of appropriate monomer and initiator concentrations, by selection of amounts and types of solvent, or combinations thereof, the desired binding polymer molecular weight may be obtained. Preferably, a chain transfer agent is used in conjunction with an initiator, or more preferably with an initiator and one or more solvents to achieve the desired molecular weight. Alternatively, small amounts of very high molecular weight binding polymer may be used in conjunction with large amounts of solvent to maintain a desired viscosity for the binding polymer. Preferably, the viscosity of the binding polymer will be about 4,000 to about 15,000 centipoise at 23° C.

Chain transfer agents useful in forming the binding polymers have chain transfer constants values of greater than about 0.01, preferably greater than about 7, and more preferably greater than about 25,000. Suitable such chain transfer agents are known and include, without limitation, aliphatic thiols of the formula R-SH wherein R is a C₁ to C₁₂ aliphatic, a benzyl, a cyclicalipahtic or CH₃(CH₂)ₓ-SH wherein x is 1 to 24, benzene, n-butyl chloride, t-butyl chloride, n-butyl bromide, 2-mercapto ethanol, 1-dodecyl mercaptan, 2-chlorobutane, acetone, acetic acid, chloroform, butyl amine, triethylamine, di-n-butyl sulfide and disulfide, carbon tetrachloride and bromide, and the like, and combinations thereof. Generally, about 0 to about 7 weight percent based on the total weight of polymer formulation will be used. Preferably dodecanethiol, decanethiol, octanethiol, or combinations thereof is used as the chain transfer agent.

Any desirable initiators may be used including, without limitation, ultra-violet, visible light, thermal initiators and the like and combinations thereof. Preferably, a thermal initiator is used, more preferably 2,2-azobis isobutyronitrile and 2,2-azobis 2-methylbutyronitrile. The amount of initiator used will be about 0.1 to about 5 weight percent based on the total weight of the formulation. Preferably, 2,2-azobis 2-methylbutyronitrile is used with dodecanethiol.

The binding polymers of the invention may be made by any convenient polymerization process including, without limitation, radical chain polymerization, step polymerization, emulsion polymerization, ionic chain polymerization, ring opening, group transfer polymerization, atom transfer polymerization, and the like. Preferably, a thermally-initiated, free-radical polymerization is used. Conditions for carrying out the polymerization are within the knowledge of one ordinarily skilled in the art.

Solvents useful in the production of the binding polymer are medium boiling solvents having boiling points between about 120 and 230°C. Selection of the solvent to be used will be based on the type of binding polymer to be produced and its molecular weight. Suitable solvents include, without limitation, diacetone alcohol, cyclohexanone, isopropyl lactate, 3-methoxy 1-butanol, 1-ethoxy-2-propanol, and the like.

Pigments useful with the binding polymer are those organic or inorganic pigments suitable for use in contact lenses, or combinations of such pigments. The opacity may be controlled by varying the concentration of the pigment and opacifying agent used, with higher amounts yielding greater opacity. Illustrative organic pigments include, without limitation, pthalocyanine blue, pthalocyanine green, carbazole violet, tank orange # 1, and the like and combinations thereof. Examples of useful inorganic pigments include, without limitation, iron oxide black, iron oxide brown, iron oxide yellow, iron oxide red, titanium dioxide, and the like, and combinations thereof. In addition to these pigments, soluble and non-soluble dyes may be used including, without limitation, dichlorotriazine and vinyl sulfone-based dyes.

Coating, or wetting, of the pigment particles with binding polymer provides better dispersion of the pigment particles in the bulk binding polymer. The coating may be achieved by use of electrostatic, dispersive, or hydrogen bonding forces to cover the pigment's surface. Preferably, a high shear force is used to disperse the pigment into the binding polymer. The pigment may be added to the binding polymer by dispensing the polymer and pigment into a suitable mixer, such as a rotary shaft mixer and mixing until a homogeneous mixture results, typically for a period of up to about 30 minutes. The mixture may be then fed into a high shear mill, such as an Eiger mill to disperse the pigment into the binding polymer. Repeated milling is carried out as necessary to achieve complete dispersion. Generally, milling is carried out until the pigments are about 0.2 to about 3 microns in size. Milling may be carried out using any suitable, commercially available device including, without limitation, a high shear or ball milling device.

In addition to the pigment and binding polymer, the preferred colorant of the invention contains one or more solvents that aid in coating of the colorant onto a surface. It is desirable, and preferred, that the colorant has a surface tension below about 27 mN/m. This surface tension may be achieved by treatment of the surface, for example a mold surface, to which the colorant will be applied. Surface treatments may be effected by methods known in the art, such as, but not limited to plasma and corona treatments. Alternatively, and preferably, the desired surface tension may be achieved by the choice of solvents used in the colorant.

Thus, the solvents useful in the colorant of the invention are those solvents that are capable of increasing or decreasing the viscosity of the colorant and aiding in controlling the surface tension. Suitable solvents include, without limitation, cyclopentanones, 4-methyl-2-pentanone, 1-methoxy-2-propanol, 1-ethoxy-2-propanol, isopropyl lactate and the like and combinations thereof. Preferably, 1-ethoxy-2-propanol and isopropyl lactate are used.

In a preferred embodiment, at least three different solvents are used in the colorant of the invention. The first two of these solvents, both medium boiling point solvents, are used in the production of the binding polymer. Although these solvents may be stripped from the binding polymer after its formation, it is preferred that they are retained. Preferably, the two solvents are 1-ethoxy-2-propanol and isopropyl lactate. An additional low boiling solvent, meaning a solvent the boiling point of which is between about 75 and about 120° C, is used to decrease the viscosity of the colorant as desired. Suitable low boiling solvents include, without limitation, 2- propanol, 1-methoxy-2-propanol, 1-propanol, and the like and combinations thereof. Preferably, 1-propanol is used.

The specific amount of solvents used will depend on a number of factors. For example, the amount of solvents used in forming the binding polymer will depend upon the molecular weight of the binding polymer desired and the constituents, such as the monomers and copolymers, used in the binding polymer. The amount of low boiling solvent used will depend upon the viscosity and surface tension desired for the colorant. Further, if the colorant is to be applied to a mold and cured with a lens material, the amount of solvent used will depend upon the lens and mold materials used and whether the mold material has undergone any surface treatment to increase its wettability. Determination of the precise amount of solvent to be used is within the skill of one ordinarily skilled in the art. Generally, the total weight of the solvents used will be about 40 to about 75 weight percent of the final colorant mixture.

One ordinarily skilled in the art will recognize that each pigment used will have a critical pigment volume for the solvents selected. The critical pigment volume may be determined by any known means and, generally, is a volume based on the efficiency of a solvent and the binding polymer to suspend the pigment particles for example, as disclosed in Patton, Temple C., Paint Flow and Pigment Dispersion, 2d ed., pp 126-300 (1993).

In addition to the solvents, a plasticizer may be and, preferably is, added to the colorant to reduce cracking during the drying of the colorant and optical mold parts, to enhance the final quality of the image produced using the colorant, and to enhance the diffusion and swelling of the colorant by the lens material. The type and amount of plasticizer used will depend on the molecular weight of the binding polymer used and, for colorants placed onto molds that are stored prior to use, the shelf-life stability desired. Useful plasticizers include, without limitation, glycerol, propylene glycol, dipropylene glycol, tripropylene glycol, polyethylene glycol 200, 400, or 600, and the like and combinations thereof. Preferably, glycerol is used. Amounts of plasticizer used generally will be 0 to about 10 weight percent based on the weight of the colorant.

The opacity of the colorant may be controlled by varying the pigment concentration and the pigment particle size used. Alternatively, an opacifying agent may be used. Suitable opacifying agents, such as for example titanium dioxide or zinc oxide, are commercially available.

In a preferred colorant mixture of the invention, about 0.2 to about 25 weight percent of pigment, about 30 to about 45 weight percent of binding polymer, about 40 to about 70 weight percent of solvents, about 0 to about 25 weight percent of titanium dioxide, and about 0.2 to about 7 weight percent of plasticizer is used. The weight percentages are based on the total weight of the colorant mixture.

The binding polymer may be loaded with about 0.2 to about 25 weight percent based on the weight of the colorant for organic pigments and about 0.2 to about 50 weight percent for inorganic pigments. However, high pigment concentrations may impart a very dark hue. Therefore, preferably about 0.2 to about 7 weight percent of organic pigments and about 0 to about 20 weight percent of inorganic pigments are used. Combinations of pigments may be used in ratios dependent upon the color, shade, and hue desired.

One ordinarily skilled in the art will recognize that additives other than those discussed may be included in the colorant composition of the invention. Suitable additives include, without limitation, additives that aid flow and leveling, additives for foam prevention, additives for rheology modification, and the like, and combinations thereof.

The colorant of the invention becomes embedded in the lens material upon curing of the material. Thus, the colorant may embed closer to the front or back surface of the lens formed depending on the surface of the mold to which the lens the colorant is applied. Additionally, one or more layers of colorant may be applied in any order. In yet another embodiment, a clear binding polymer layer may be used in conjunction with the colorant. For example, in the method of the invention a clear binding polymer layer may be applied to the molding surface of a mold half prior to application of the colorant. The clear binding polymer may be the same or different from the binding polymer used for the colorant layers. If the clear binding polymer is different from the binding polymer, it typically is compatible with the binding polymer and lens material in terms of expansion factor and ability to swell and it typically is capable of swelling into the lens material.

As described above, many lens materials are useful in this invention; however, in the preferred embodiment, the lens material used is a HEMA based hydrogel, more preferably etafilcon A, and the binding polymer is formed from linear random block copolymers of MAA, HEMA and lauryl methacrylate ("LMA"); linear random block copolymers of MAA and HEMA; linear random block copolymers of HEMA and LMA; or a HEMA homopolymer. Etafilcon A, disclosed in U.S. Patent Nos. 4,680,336 and 4,495,313 incorporated herein in their entireties by reference, generally is a formulation of 100 parts by weight ("pbw") HEMA, about 1.5 to about 2.5 pbw MAA, approximately 0.3 to about 1.3 pbw ethylene glycol dimethacrylate, about 0.05 to about 1.5 pbw 1,1,1-trimethylolpropane trimethacrylate, and about 0.017 to about 0.024 pbw of a visibility tint. Preferably etafilcon A is used with a linear random block copolymer of MAA, HEMA and LMA in a ratio of 0.47 MAA to 100 HEMA to 4.14 LMA, or with a linear random block copolymer of HEMA and MAA in a ratio of 99.9 HEMA and 0.1 MAA to 99.5 HEMA and 0.5 MAA as binding polymer.

A preferred method of manufacturing a tinted lens is carried out using pad printing as follows. A metal plate, preferably made from steel and more preferably from stainless steel, is covered with a photo resist material that is capable of becoming water insoluble once cured. The pattern for the colorant is selected or designed and then reduced to the desired size using any of a number of techniques such as photographic techniques, placed over the metal plate, and the photo resist material is cured. Conditions for carrying out the pattern etching are within the knowledge of one ordinarily skilled in the art.

Following the pattern, the plate is subsequently washed with an aqueous solution and the resulting image is etched into the plate to a suitable depth, for example about 20 microns. The colorant is then deposited onto the pattern to fill the depressions with colorant. A silicon pad of a suitable geometry and varying hardness, generally about 1 to about 10 Shore A durometer units, is pressed against the image on the plate to remove the colorant and the colorant is then dried slightly by evaporation of the solvent. The pad is then pressed against the molding surface of an optical mold, transferring the colorant to the mold. The colorant is allowed to dry. The mold is degassed for a minimum of about 8 hours to remove excess solvents and oxygen after which the mold is filled with lens forming amount of a lens material. A complementary mold half is then used to complete the mold assembly and, after a period of diffusion during which the lens monomer diffuses into the printed image, the mold assembly is exposed to conditions suitable to cure the lens material used.

The invention will be clarified further by consideration of the following, nonlimiting example.

### Example (typical enhancer lens)

A colorant composition containing a binding polymer (made from lauryl methacrylate, 2-hydroxyethyl methacrylate and methacrylic acid), pigments and isopropyl lactate, 1-ethoxy-2-propanol, and 1-propoanol, was pad printed onto the front curve molding surface of a polystyrene optical mold. The mold was degassed by placing it in a nitrogen environment for at least 8 hours to remove excess solvents and oxygen after which the mold was filled with a lens-forming amount of etafilcon A monomer mix. A complementary mold half was then used to complete the mold assembly.

The mold assembly was placed onto a belt that passes through a cure tunnel, the inside of which tunnel was mounted 4 sets of 2, side-by-side, short wave IR lamps at the beginning of the tunnel, In this tunnel, the mold assembly passed under the IR bulbs and was heated to the Tg of the colorant. Control of the intensity of each bulb was maintained by a microprocessor-based temperature controller. The mold assembly then passed into a dark zone in which no bulbs were present, but in which heaters heated the air to between 55 and 75°C to maintain the mold temperature at or above the colorant Tg. The mold passed through the IR bulb and dark zone of the tunnel at a speed so that it remained in this zone for about 75 seconds during which time the Tg temperature was maintained by a continuous feedback system that monitored the mold temperature. The mold then exited this zone and photochemical curing of the lens material was initiated and completed. Once curing was completed, the mold assembly was separated with the lens remaining in the front curve mold. The front curve molds were placed in trays, trays were placed in a magazine, and the magazine was placed in the first hydration solution. The first hydration solution contained DI water at 70-80°C with 800 ppm Tween 80 and 103 ppm EDTA. Upon insertion into the first solution the lens swelled slightly (<5%) and released from the mold into a hydration tray bowl. The lenses were kept in the first solution for at least 80 and not more than 232 minutes. The lenses were then transferred to a 45°C tank containing borate buffered saline, containing water with 0.85% NaCl, 0.93% boric acid, and 0.18% sodium borate (by weight). The lenses were kept in this tank for greater than 156 minutes during which time the acid groups in the lens polymer de-protonated. The lenses were then transferred to a third tank containing DI water at 70°C with 800 ppm Tween 80 and 103 ppm EDTA. Lenses were kept in the third tank between 45 and 70 minutes during which the diameter of the lenses increased to 18.1 mm. The lenses were then transferred to a fourth tank identical to the second of borate-buffered saline at 45°C, in which the lenses returned to their functional size of 14.0 mm. The lenses stayed in the fourth tank a minimum of 156 minutes. The process is summarized in Table 1.

**Table 1 - Lens cleaning process**

| **Step** | **Temperature** | **Solution** | **Time** |
|---|---|---|---|
| | | | |
| 1 | 70-80°C | DI water with 800 ppm Tween 80 | 80-232 minutes |
| 2 | 45°C | Borate-buffered saline | 156 minutes |
| 3 | 70°C | DI water with 800 ppm Tween 80 | 45-70 minutes |
| 4 | 45°C | Borate-buffered saline | >156 minutes |

The invention has been described herein with reference to its preferred embodiments; however, variations within the scope of the claims below would be known to a person of ordinary skill in the art, and are therefore included therein.

## Claims

1. A method for removing excess material from a contact lens having a functional size, comprising:
swelling said contact lens through contact with a first liquid to provide a swollen contact lens that is larger than said functional size; and
shrinking said swollen contact lens through contact with a second liquid, **characterised in that** said first liquid, said second liquid, or both comprise sodium borate, dihydrogen sodium phosphate, sodium citrate, sodium acetate, or any combination thereof and said first liquid, said second liquid, or both comprise a buffered aqueous solution.

2. The method according to claim 1, wherein said first liquid and said second liquid have different ionic strengths.

3. The method according to claim 2, wherein said first liquid has a greater ionic strength than said second liquid.

4. The method according to claim 1, wherein said buffered aqueous salt solution comprises about 0.01 percent to about 10 percent by weight salt.

5. The method according to claim 1, wherein said second liquid comprises distilled water or deionized water.

6. The method according to claim 2, wherein the ionic strengths of the first liquid and the second liquid differ by about 3 to about 30 milli-Siemens/cm.

7. The method according to claim 1, wherein said swelling step introduces greater than 5 percent more water into said contact lens.

8. The method according to claim 1, wherein said swelling step increases the diameter of said contact lens by at least about 1 mm.

9. The method according to claim 1, wherein said contact lens comprises a soft contact lens comprising from 0 to about 90 percent water.

10. The method according to claim 1, wherein said swelling, said shrinking, or both are performed for about 2 minutes to about 400 minutes.

11. The method according to claim 1, wherein said swelling, said shrinking, or both are performed at a temperature between about 5 and about 95°C

12. The method according to claim 1, wherein said contact lens further comprises a diluent and said method further comprises removing said diluent from said contact lens.

13. The method according to claim 12, wherein said diluent is removed prior to said swelling.

14. The method according to claim 12, wherein said contact lens swells during said diluent removal.

15. The method according to claim 1, wherein said contact lens is tinted.

16. The method according to claim 1, wherein said contact lens comprises a HEMA-based hydrogel.

17. The method according to claim 16, wherein said HEMA-based hydrogel is etafilcon A.

## Patentansprüche

1. Verfahren zur Entfernung von überschüssigem Material aus einer Kontaktlinse mit einer funktionellen Größe, welches umfasst:
Aufquellen der Kontaktlinse durch Kontakt mit einer ersten Flüssigkeit, um eine aufgequollene Kontaktlinse bereitzustellen, die größer ist als die funktionelle Größe; und
Schrumpfen der aufgequollenen Kontaktlinse durch Kontakt mit einer zweiten Flüssigkeit,
**dadurch gekennzeichnet, dass**
die erste Flüssigkeit, die zweite Flüssigkeit oder beide Natriumborat, Dihydrogennatriumphosphat, Natriumcitrat, Natriumacetat oder irgendeine Kombination derselben umfassen und die erste Flüssigkeit, die zweite Flüssigkeit oder beide eine gepufferte wässrige Lösung umfassen.

2. Verfahren nach Anspruch 1, **dadurch gekennzeichnet, dass** die erste Flüssigkeit und die zweite Flüssigkeit unterschiedliche Ionenstärken besitzen.

3. Verfahren nach Anspruch 2, **dadurch gekennzeichnet, dass** die erste Flüssigkeit eine größere Ionenstärke als die zweite Flüssigkeit besitzt.

4. Verfahren nach Anspruch 1, **dadurch gekennzeichnet, dass** die gepufferte wässrige Salzlösung etwa 0,01 1 bis etwa 10 Gewichtsprozent Salz umfasst.

5. Verfahren nach Anspruch 1, **dadurch gekennzeichnet, dass** die zweite Flüssigkeit destilliertes Wasser oder entionisiertes Wasser umfasst.

6. Verfahren nach Anspruch 2, **dadurch gekennzeichnet, dass** die Ionenstärken der ersten Flüssigkeit und der zweiten Flüssigkeit sich um etwa 3 bis etwa 30 Milli-Siemens/cm unterscheiden.

7. Verfahren nach Anspruch 1, **dadurch gekennzeichnet, dass** besagter Aufquellungsschritt mehr als 5 Prozent mehr Wasser in die Kontaktlinse einbringt.

8. Verfahren nach Anspruch 1, **dadurch gekennzeichnet, dass** der Aufquellungsschritt den Durchmesser der Kontaktlinse um wenigstens etwa 1 mm vergrößert.

9. Verfahren nach Anspruch 1, **dadurch gekennzeichnet, dass** die Kontaktlinse eine weiche Kontaktlinse umfasst, die von 0 bis etwa 90 Prozent Wasser umfasst.

10. Verfahren nach Anspruch 1, **dadurch gekennzeichnet, dass** das Aufquellen, das Schrumpfen oder beides für etwa 2 Minuten bis etwa 400 Minuten durchgeführt werden.

11. Verfahren nach Anspruch 1, **dadurch gekennzeichnet, dass** das Aufquellen, das Schrumpfen oder beides bei einer Temperatur zwischen etwa 5 und etwa 95°C durchgeführt werden.

12. Verfahren nach Anspruch 1, **dadurch gekennzeichnet, dass** die Kontaktlinse weiter ein Verdünnungsmittel umfasst und das Verfahren weiter das Entfernen des Verdünnungsmittels aus der Kontaktlinse umfasst.

13. Verfahren nach Anspruch 12, **dadurch gekennzeichnet, dass** das Verdünnungsmittel vor dem Aufquellen entfernt wird.

14. Verfahren nach Anspruch 12, **dadurch gekennzeichnet, dass** die Kontaktlinse während der Entfernung des Verdünnungsmittels aufquillt.

15. Verfahren nach Anspruch 1, **dadurch gekennzeichnet, dass** die Kontaktlinse gefärbt ist.

16. Verfahren nach Anspruch 1, **dadurch gekennzeichnet, dass** die Kontaktlinse ein Hydrogel auf HEMA-Basis umfasst.

17. Verfahren nach Anspruch 16, **dadurch gekennzeichnet, dass** das Hydrogel auf HEMA-Basis Etafilcon A ist.

## Revendications

1. Procédé pour retirer du matériau en excès d'une lentille de contact ayant une taille fonctionnelle, comprenant les étapes consistant à :
faire gonfler ladite lentille de contact en la mettant en contact avec un premier liquide pour fournir une lentille de contact gonflée qui est plus grande que ladite taille fonctionnelle ; et
faire rétrécir ladite lentille de contact gonflée en la mettant en contact avec un second liquide, ledit premier liquide, ledit second liquide ou les deux comprennent du borate de sodium, du phosphate de sodium dihydrogène, du citrate de sodium, de l'acétate de sodium ou l'une quelconque de leur combinaison, et ledit premier liquide et ledit second liquide ou les deux comprennent une solution aqueuse tampon.

2. Procédé selon la revendication 1, dans lequel ledit premier liquide et ledit second liquide ont des résistances ioniques différentes.

3. Procédé selon la revendication 2, dans lequel ledit premier liquide a une résistance ionique supérieure audit second liquide.

4. Procédé selon la revendication 1, dans lequel ladite solution saline aqueuse tampon comprend d'environ 0,01 pour cent à environ 10 pour cent en poids de sel.

5. Procédé selon la revendication 1, dans lequel ledit second liquide comprend de l'eau distillée ou de l'eau déionisée.

6. Procédé selon la revendication 2, dans lequel les résistances ioniques du premier liquide et du second liquide diffèrent d'environ 3 à environ 30 milli-Siemens/cm.

7. Procédé selon la revendication 1, dans lequel ladite étape de gonflement comprend plus de 5 pour cent d'eau dans ladite lentille de contact.

8. Procédé selon la revendication 1, dans lequel ladite étape de gonflement augmente le diamètre de ladite lentille de contact selon au moins environ 1 mm.

9. Procédé selon la revendication 1, dans lequel ladite lentille de contact comprend une lentille de contact souple comprenant de 0 à environ 90 pour cent d'eau.

10. Procédé selon la revendication 1, dans lequel ledit gonflement, ledit rétrécissement ou les deux sont réalisés pendant environ 2 minutes à environ 400 minutes.

11. Procédé selon la revendication 1, dans lequel ledit gonflement, ledit rétrécissement ou les deux sont réalisés à une température comprise entre environ 5 et environ 95°C.

12. Procédé selon la revendication 1, dans lequel ladite lentille de contact comprend en outre un diluant et ledit procédé comprend en outre l'étape consistant à retirer ledit diluant de ladite lentille de contact.

13. Procédé selon la revendication 12, dans lequel ledit diluant est retiré avant ledit gonflement.

14. Procédé selon la revendication 12, dans lequel ladite lentille de contact se gonfle pendant le retrait dudit diluant.

15. Procédé selon la revendication 1, dans lequel ladite lentille de contact est teintée.

16. Procédé selon la revendication 1, dans lequel ladite lentille de contact comprend un hydrogène à base de HEMA.

17. Procédé selon la revendication 16, dans lequel l'hydrogène à base de HEMA est l'etafilcon A.
